# EUROPEAN PATENT APPLICATION

(11) **EP 4 746 399 A1**
(43) Date of publication of application: **20.05.2026**
(21) Application number: 24856703.4
(22) Date of filing: 06.08.2024
(51) Int. Cl.: H04N 5/915, H04N 5/907, H04N 5/92, H04N 5/77

(54) **ELECTRONIC DEVICE COMPRISING CAMERA AND OPERATION METHOD THEREFOR**

(30) Priority: 18.08.2023 KR 20230108452; 09.11.2023 KR 20230154696
(71) Applicant: Samsung Electronics Co., Ltd., Suwon-si, Gyeonggi-do 16677 (KR)
(72) Inventor: KIM, Bosung, Suwon-si Gyeonggi-do 16677 (KR); KIM, Jihyun, Suwon-si Gyeonggi-do 16677 (KR); KIM, Hyunsoo, Suwon-si Gyeonggi-do 16677 (KR); PARK, Kyoungkeun, Suwon-si Gyeonggi-do 16677 (KR); LEE, Kyuseung, Suwon-si Gyeonggi-do 16677 (KR)
(74) Representative: Gulde & Partner
(86) International application number: PCT/KR2024/011558
(87) International publication number: WO 2025/042090

(57) **Abstract**

An electronic device according to various embodiments may comprise: a memory for storing a first image file including a first still image, a first video associated with the first still image, and first metadata, and a second image file including a second still image, a second video associated with the second still image, and second metadata; and at least one processor operatively connected to the memory, wherein the at least one processor may execute instructions stored in the memory to: receive a first input for selecting the first still image; identify the second video associated with the first video on the basis of at least one of the first metadata and the second metadata; and play a third video in which at least some of first image frames included in the first video and at least some of second image frames included in the second video are continuously played.

## Description

### [Technical Field]

The disclosure relates to an electronic device including a camera and an operation method thereof.

### [Background Art]

There is a growing trend of electronic devices supporting multimedia formats that provide short videos of the moments when photos were captured. These formats offer the advantage of quick video capturing, while allowing users to vividly feel the atmosphere of the moment the photo was taken through a video with a relatively small file size.

The information described above may be provided as a related art for helping understanding of the disclosure. No assertion or determination is made as to whether any content described above could be applied as prior art related to the disclosure.

### [Disclosure of Invention]

### [Solution to Problem]

An electronic device according to an embodiment of the disclosure may include a memory configured to store a first image file including a first still image, a first video associated with the first still image, and first metadata, and a second image file including a second still image, a second video associated with the second still image, and second metadata, and at least one processor operatively connected to the memory. The at least one processor may execute instructions stored in the memory to receive a first input for selecting the first still image. The at least one processor may identify the second video associated with the first video, based on at least one of the first metadata or the second metadata. The at least one processor may reproduce a third video in which at least some of first image frames included in the first video and at least some of second image frames included in the second video are reproduced continuously.

An electronic device according to an embodiment of the disclosure may include at least one camera, a display, a memory, and at least one processor operatively connected to the display, the memory, and the at least one camera. The at least one processor may execute instructions stored in the memory to, in response to a first input for executing the at least one camera, display, through the display, a preview image obtained from at least one image frame output from the at least one camera. The at least one processor may store the at least one image frame in the memory while displaying the preview image through the display. The at least one processor may obtain a first still image through at least some of the at least one camera in response to a second input for capturing a still image received while displaying the preview image. The at least one processor may generate a first video from at least some of the stored at least one image frame, corresponding to the first still image. The at least one processor may store, in the memory, a first file including the first still image, the first video, and first metadata for the first video.

An operation method of an electronic device according to an embodiment of the disclosure may include receiving a first input for selecting a first still image, identifying a second video associated with a first video, based on at least one of first metadata or second metadata, and reproducing a third video in which at least some of first image frames included in the first video and at least some of second image frames included in the second video are reproduced continuously. The first video may be associated with the first still image and the second video may be associated with a second still image. The first still image, the first video associated with the first still image, and the first metadata may be included in a first image file, and the second still image, the second video associated with the second still image, and the second metadata may be included in a second image file.

### [Brief Description of Drawings]

FIG. 1 is a block diagram of an electronic device in a network environment according to various embodiments.
FIG. 2 is a block diagram illustrating a configuration of an electronic device according to an embodiment.
FIG. 3 is a block diagram illustrating a structure for generating content in an electronic device according to an embodiment.
FIG. 4 is a flowchart illustrating a process of an operation method for generating content by an electronic device according to an embodiment.
FIG. 5 is a flowchart illustrating a process of an operation method for generating content by an electronic device according to an embodiment.
FIG. 6 is a block diagram illustrating a structure for generating content by an electronic device by using a still image and a video associated with the still image according to an embodiment.
FIG. 7 is a flowchart illustrating a process of an operation method for generating a continuously reproducible video by an electronic device, based on multiple videos according to an embodiment.
FIG. 8 is a block diagram illustrating a structure for generating a continuously reproducible video by an electronic device, based on multiple videos according to an embodiment.
FIG. 9 is a flowchart illustrating a process of a method of removing redundant frames, by an electronic device, in generating a continuously reproducible video according to an embodiment.
FIG. 10 is a flowchart illustrating a process of a method of generating a continuously reproducible video by an electronic device, based on a time interval between multiple videos according to an embodiment.
FIG. 11 is a flowchart illustrating a process of a method of generating a continuously reproducible video by an electronic device, based on information on places where multiple videos are obtained according to an embodiment.
FIG. 12 is a flowchart illustrating a process of a method of generating a continuously reproducible video, based on information on electronic devices by which multiple videos are obtained according to an embodiment.
FIG. 13 is a flowchart illustrating a process of a method of generating a continuously reproducible reproduction list by an electronic device by using multiple videos according to an embodiment.
FIG. 14 is a diagram illustrating an example of a visual object for generating a new video by connecting multiple videos, and sharing the generated new video according to an embodiment.

In relation to the description of drawings, the same or similar elements may be indicated by the same or similar reference signs.

### [Mode for the Invention]

Hereinafter, embodiments of the disclosure will be described in detail with reference to the accompanying drawings so that those of ordinary skill in the art to which the disclosure pertains are able to easily implement them. However, the disclosure may be implemented in various forms, and should not be construed as being limited to the embodiments set forth herein. In the drawings, parts irrelevant to the description are omitted to clearly describe the disclosure, and similar reference numerals are assigned to similar parts throughout the specification.

The terms used in the disclosure are described as general terms currently in use while considering the functions mentioned in the disclosure. However, these terms may vary depending on the intention of a technician working in the field, precedents, or the emergence of new technologies. Therefore, the terms used in the disclosure are not to be interpreted solely by their names, but are to be interpreted based on the specific meanings of the terms and the overall content of the disclosure.

In addition, terms such as first, second, etc., may be used to describe various elements, but the elements are not to be limited by these terms. These terms are used for the purpose of distinguishing one element from another.

Throughout the specification, when a part is referred to as being "connected" to another part, this includes not only a case of being "directly connected" but also a case of being "electrically connected" with another element interposed therebetween. Furthermore, when a part "includes" an element, this means that the part is capable of further including other elements rather than excluding them, unless specifically stated otherwise.

In the disclosure, phrases such as "in an embodiment" appearing in various places do not necessarily refer to the same embodiment.

An embodiment of the disclosure may be represented by functional block components and various processing stages. Some or all of these functional blocks may be implemented with any number of hardware and/or software components configured to perform specific functions. For example, the functional blocks of the disclosure may be implemented by one or more microprocessors or by circuit components for predetermined functions. Also, for example, the functional blocks of the disclosure may be implemented in various programming or scripting languages. The functional blocks may be implemented as an algorithm executed on one or more processors. Furthermore, the disclosure may employ conventional technologies for electronic environment configuration, signal processing, and/or data processing. Terms such as "mechanism," "element," "means," and "component" are used broadly and are not limited to mechanical and physical components.

Additionally, the connection lines or connection members between the elements illustrated in the drawings merely represent an example of functional connections and/or physical or circuit connections. In an actual device, the connections between elements may be represented through various alternative or additional functional, physical, or circuit connections.

Hereinafter, the disclosure will be described in detail with reference to the accompanying drawings.

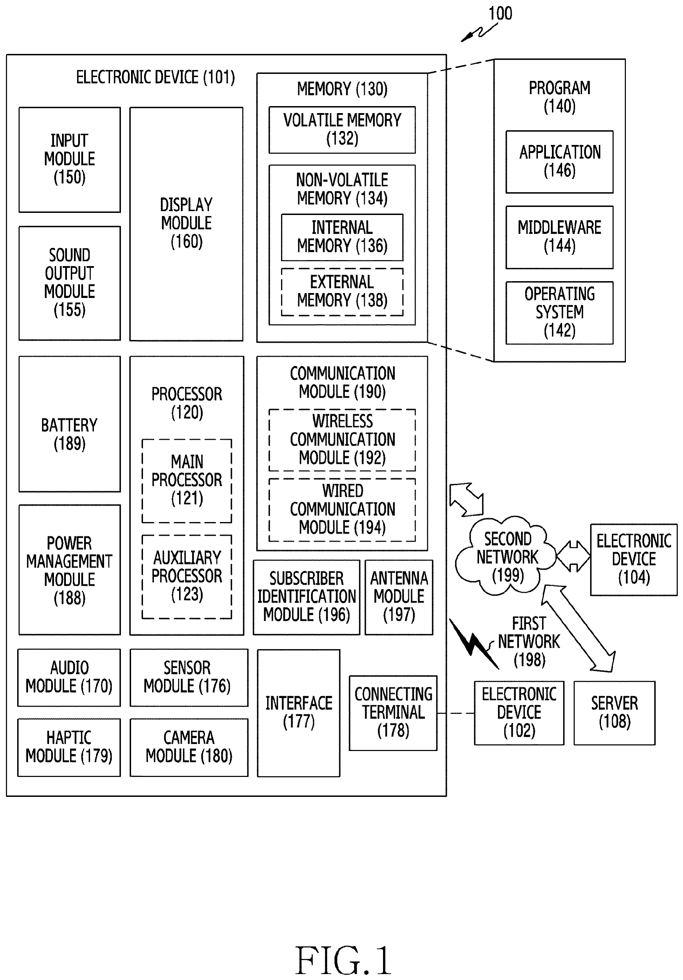

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197. According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

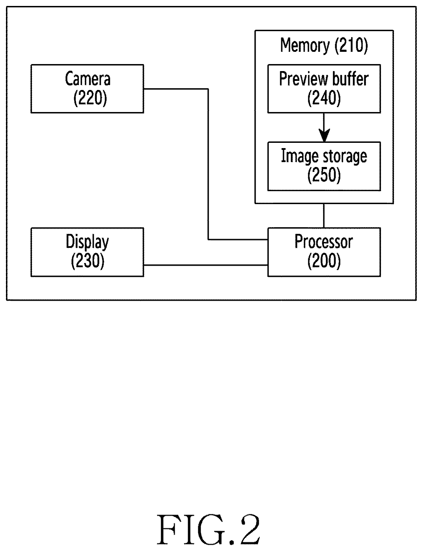

According to an embodiment of the disclosure, FIG. 2 is a block diagram illustrating a configuration of an electronic device according to an embodiment.

According to an embodiment of the disclosure, the electronic device 101 may include a processor 200, a memory 210, a camera 220, and a display 230. The memory 210 may include a preview buffer 240 and an image storage 250. The block diagram illustrated in FIG. 2 is provided for conceptually describing elements included in the electronic device 101 in an embodiment. In an embodiment, the electronic device 101 may include more elements than those illustrated in FIG. 2, or may be configured by fewer elements. The elements illustrated in FIG. 2 may be replaced by other elements that perform similar functions, or may be integrated with other elements. The processor 200 may correspond to the processor 120 in FIG. 1. The memory 210 may correspond to the memory 130 in FIG. 1. The camera 220 may correspond to the camera module 180 in FIG. 1. The display 230 may correspond to the display module 160 in FIG. 1.

According to an embodiment of the disclosure, the processor 200 may execute the camera 220, based on an input for executing an application for the camera 220. The electronic device 101 may acquire at least one image frame from the camera 220. The acquired at least one image frame may be temporarily stored in the preview buffer 240. For example, the at least one image frame stored in the preview buffer 240 may be deleted from the preview buffer 240 when a predetermined time pre-configured in the electronic device 101 elapses. For example, the at least one image frame stored in the preview buffer 240 may be deleted from the preview buffer 240 when the at least one image frame is displayed as a preview image through the display 230. The processor 200 may allow the image storage 250 to store the at least one image frame in preparation for the deletion of the at least one image frame stored in the preview buffer 240. In an embodiment, the image storage 250 may store an image frame even after the image frame is deleted from the preview buffer 240. For example, the image storage 250 may store at least one image frame output from the preview buffer 240 until a predetermined time elapses from a time point at which a user input for capturing a still image is received.

According to an embodiment of the disclosure, the processor 200 may display a preview image through the display 230, based on at least one image frame acquired from the camera 220. The preview image may include a live image in which an image stream acquired through the camera 220 is continuously updated and displayed. The processor 200 may acquire a still image in response to an input for capturing an image through the camera. The processor 200 may generate a video corresponding to the acquired still image, based on at least some of at least one image frame stored in the image storage 250. The video corresponding to the still image may be generated based on metadata. For example, the metadata may include metadata including information on the still image, or metadata including information on at least one image frame stored in the image storage 250. The processor 200 may extract at least one image frame associated with the still image from the image storage 250, based on the metadata for the still image. Based on the extracted at least one image frame and the still image, the processor 200 may generate content. The generated content may be stored in the memory 210. For example, a file including the still image, the video corresponding to the still image, and metadata for the video may be stored in the memory 210.

In an embodiment, the processor 200 may reproduce at least one content stored in the memory 210. For example, the processor 200 may receive a user input for selecting a first still image stored in the memory 210. Based on the user input for selecting the first still image, the processor 200 may reproduce a first video stored in association with the first still image. Based on the user input for selecting the first still image, the processor 200 may continuously reproduce image frames included in multiple videos. For example, the processor 200 may reproduce a third video in which at least some of first image frames included in the first video, and at least some of second image frames included in a second video captured at a capturing time point adjacent to a capturing time point of the first video are reproduced continuously.

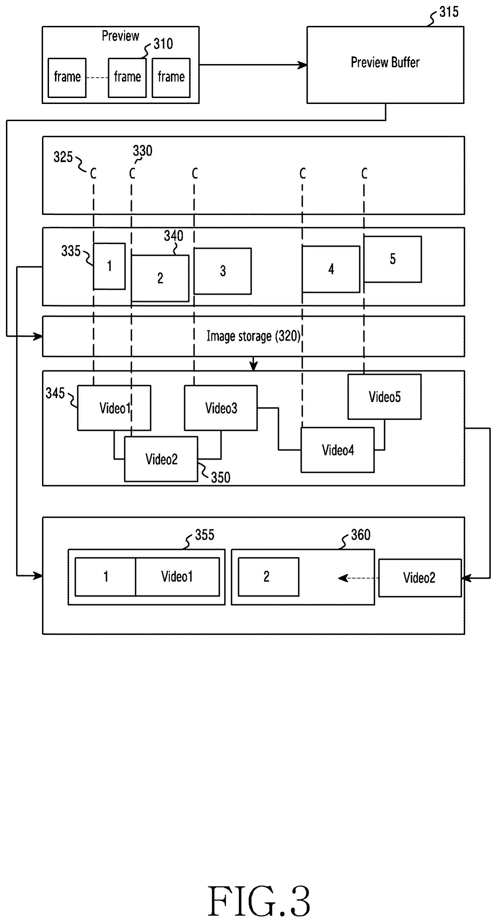

According to an embodiment of the disclosure, FIG. 3 is a block diagram illustrating an example of a structure for generating content in an electronic device according to an embodiment.

According to an embodiment of the disclosure, in response to an input for executing the camera 220, an image frame 310 may be stored in a preview buffer 315 and a video storage 320. For example, the image frame 310 may include at least one image frame. The processor 200 may temporarily store the acquired image frame 310 in the preview buffer 315 included in the memory 210. The preview buffer 315 may include a buffer queue in which the image frame 310 output from the camera 220 is stored until the image frame is displayed as a preview image. According to the output of the image frame 310 from the preview buffer 315 to be displayed as a preview image, the image frame 310 may be deleted from the preview buffer. In order to generate a video from the image frame 310 displayed as a preview image after capturing of a still image is terminated, the processor 200 may at least temporarily store the image frame 310 stored in the preview buffer 315 in the image storage 320. The preview buffer 315 may correspond to the preview buffer 240 of FIG. 2. The image storage 320 may correspond to the image storage 250 in FIG. 2.

According to an embodiment of the disclosure, the processor 200 may receive an input for obtaining an image through the camera 220. For example, the processor 200 may obtain a first image 335, based on a first capture request 325. For example, the processor 200 may obtain a second image 340, based on a second capture request 330. The processor 200 may generate metadata for an acquired image. For example, the metadata may include at least one of a time point at which the image is acquired, a place where the image is acquired, device identification information on an electronic device having acquired the image, and information on an image frame within a predetermined time from the time point at which the image is acquired.

According to an embodiment of the disclosure, the processor 200 may identify a video corresponding to a still image among the image frames 310 stored in the image storage 320, based on an acquired image. The processor 200 may identify a first video 345 corresponding to the first image 335 in the image storage 320. The processor 200 may identify the first video 345, based on the metadata for the first image 335. For example, the processor 200 may identify at least some of the image frames 310 stored in the image storage 320 within a predetermined time from a time point at which the first image 335 is acquired, based on the metadata, and may generate the first video 345 configured by the identified image frames. For example, the processor 200 may identify the first video 345 including image frames captured at time points within a predetermined time after the time point at which the first image 335 is acquired. However, as illustrated in FIG. 3, the first video 345 may not necessarily include only image frames captured after the time point at which the first image 355 is acquired. For example, the first video 345 may include image frames captured at time points within a predetermined time before the time point at which the first image 335 is acquired. For example, the first video 345 may include image frames captured at time points within a predetermined time before and after the time point at which the first image 335 is acquired.

According to an embodiment of the disclosure, the processor 200 may identify a video corresponding to an image, based on a place where the image is acquired or device identification information on an electronic device having acquired the image. For example, based on the place where the first image 335 is acquired, the processor 200 may identify the first video including image frames, which are captured in the same place as the place where the first image 335 is acquired, among the image frames stored in the image storage 320. For example, based on the device identification information on the electronic device having acquired the first image 335, the processor 200 may identify the first video including image frames captured by the same device as the device having acquired the first image 335, among the image frames stored in the image storage 320.

According to an embodiment of the disclosure, the processor 220 may generate first content 355 including the first video 345 identified based on the first image 335 and the metadata for the first image 335. The processor 200 may store a first file including the generated first content 355 and metadata for the first content 355 in the memory 210.

According to an embodiment of the disclosure, the processor 200 may obtain the second image 340, based on the second capture request 330. The processor 200 may identify a second video 350, based on the metadata related to the second image 340 among the image frames stored in the image storage 320. The processor 200 may identify the second video 350 including some of the image frames included in the first video 345. For example, when the processor 200 receives the second capture request 330 at a time point before a time point at which the last image frame of the first video is captured, some of the image frames included in the first video 345 may also be included in the second video 350.

According to an embodiment of the disclosure, the processor 200 may identify other videos, based on metadata related to a video. For example, the processor 200 may identify the second video 350, based on metadata for the first video 345. The processor 200 may identify a different video by using time points at which a start image frame indicating the start and an end image frame indicating the end among multiple image frames included in a video are stored in the image storage 320. For example, when a time period in which first image frames included in the first video 345 are captured at least partially overlaps with or is adjacent to a time period in which second image frames included in the second video 350 are captured, the processor 200 may identify the second video 350 as a video adjacent to the first video 345. However, the processor is not limited to identifying an adjacent video, based only on the storage time points of the image frames included in a video. The processor 200 may also identify an adjacent video, based on a place where the image frames are obtained or information on an electronic device having obtained the image frames.

In an embodiment, the processor 200 may identify a plurality of continuously captured videos. For example, the processor 200 may further identify another video associated with (or adjacent to) the second video 350. The processor 200 may identify associated videos until no video connected thereafter is identified.

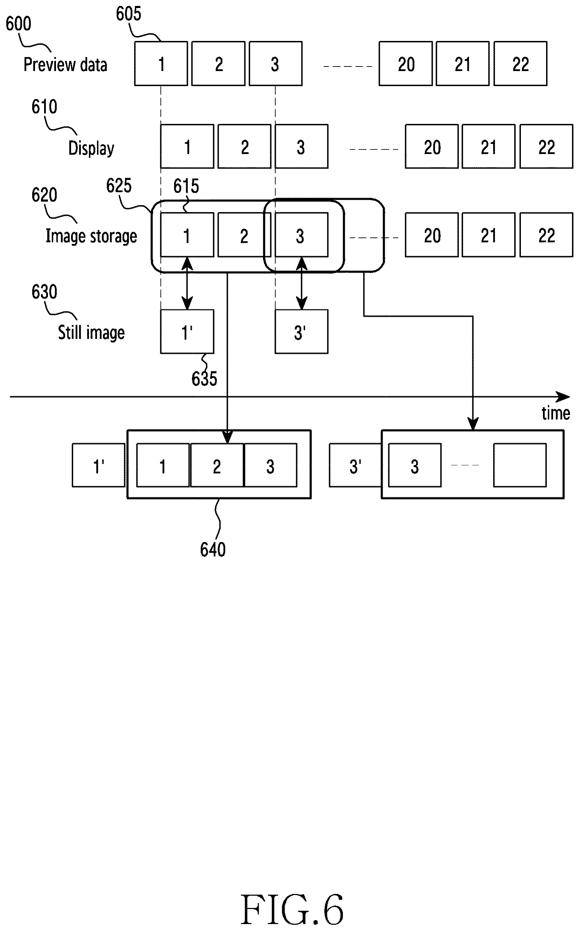

According to an embodiment of the disclosure, the processor 200 may connect associated (or adjacent) videos and reproduce the connected videos, based on metadata for a video. For example, the processor 200 may determine a list of associated (or adjacent) videos, and may continuously reproduce videos included in the list. For example, the processor 200 may generate a third video, based on at least some image frames included in associated (or adjacent) videos. Description of an operation in which videos are connected and reproduced is described later in FIG. 6 and following figures.

According to an embodiment of the disclosure, the processor 200 may store the first file including the first content in the memory 210. The first file may include the first image 335, the first video 345, and metadata for the first video 345. The processor 200 may store a second file including second content in the memory 210. The second file may include the second image 340, the second video 350, and metadata for the second video 350. The metadata included in each file may further include identification information for identifying a video associated with the video included in the file.

According to an embodiment of the disclosure, the processor 200 may, in generating content, identify a video including frames corresponding to an image, among the image frames 310 stored in the image storage 320, based on metadata related to the image, thereby shortening a time required to generate the content. For example, after receiving multiple inputs for acquiring multiple images, the processor 200 may identify a video corresponding to an image, based on metadata related to the image, and encode the image and the video. However, the operation of generating content by the processor 200 is not required to be performed only after the operation for acquiring an image, and may also be performed during acquisition of an image.

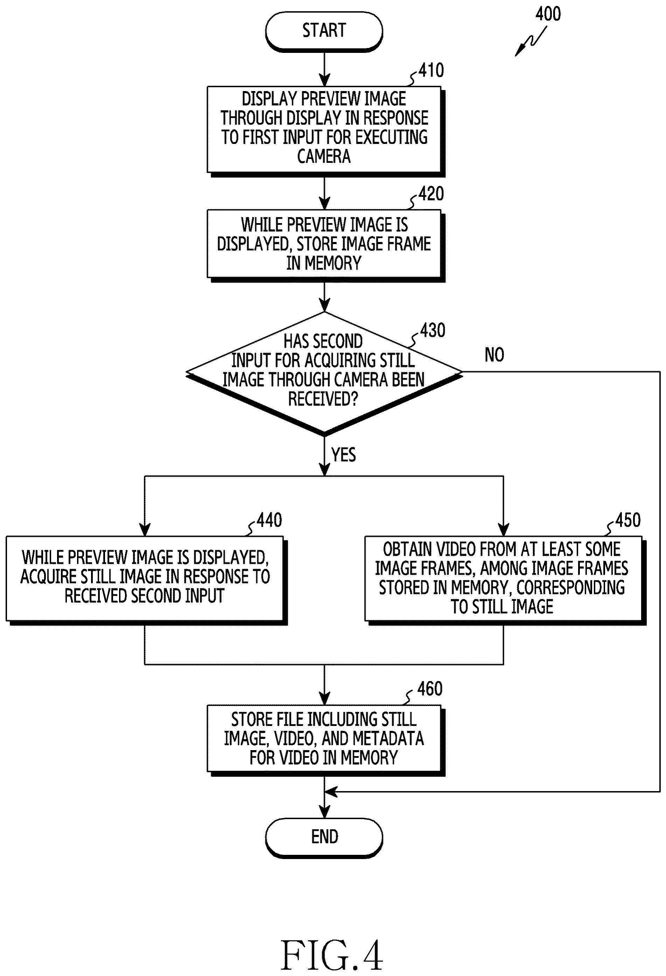

FIG. 4 is a flowchart 400 illustrating a process of an operation method for generating content by the electronic device 101 according to an embodiment.

Referring to FIG. 4, in operation 410 according to an embodiment of the disclosure, the processor 200 may display a preview image through the display 230 in response to a first input for executing the camera 220. For example, the first input may include a user input (e.g., a touch input or a swipe input) made by a user with regard to the display. For example, the first input may include a user input on a button of the electronic device 101.

According to an embodiment of the disclosure, the processor 200 may acquire an image frame to display the preview image on the display 230. For example, in response to the first input for executing the camera 220, the processor 200 may obtain at least one image frame from the camera 220. The acquired at least one image frame may be stored in the preview buffer 315 included in the memory 210. The processor 200 may display the preview image through the display 230, based on the at least one image frame stored in the preview buffer 315.

According to an embodiment of the disclosure, the preview image may include the image frame 310. The image frame 310 may include at least one image frame.

According to an embodiment of the disclosure, in operation 420, while the preview image is displayed through the display 230, the processor 200 may store the image frame 310 in the memory 210.

According to an embodiment of the disclosure, while the preview image is displayed through the display 230, the processor 200 may store the image frame 310 in the memory in order to use at least one image frame stored in the image storage 320.

For example, the processor 200 may store at least some of the image frames 310 in the image storage 320. By storing at least some of the image frames 310 in the image storage 320, the processor 200 may store at least some of the image frames 310 for a longer time in the memory 210 than when the at least some of the image frames are stored in the preview buffer 315. For example, the image frame 310 stored in the preview buffer 315 may be deleted from the preview buffer 315 according to the output of the image frame as a preview image, but the image frame 310 may be stored in the memory 210 until generation of content including a video associated with a still image is completed. For example, when the image frame 310 is stored in the preview buffer 315, the image frame may be temporarily stored for a first time and then deleted. However, when the image frame 310 is stored in the image storage 320, the image frame may remain stored for a second time that is relatively longer than the first time.

According to an embodiment of the disclosure, operation 430 is an operation in which the processor 200 identifies whether a second input for acquiring a still image through the camera 220 has been received. For example, the second input may include a user input (e.g., a touch input or a swipe input) made by the user with regard to the display. For example, the second input may include a user input on a button of the electronic device 101.

According to an embodiment of the disclosure, when the processor 200 fails to receive the second input for acquiring the still image through the camera 220 within a predetermined time after receiving the first input for executing the camera 220, the processor may terminate a process for processing an image frame to display content on the display 230.

According to an embodiment of the disclosure, when the processor 200 receives the second input for acquiring the still image through the camera 220 within a predetermined time after receiving the first input for executing the camera 220, the processor may perform operation 440 or 450.

According to an embodiment of the disclosure, in operation 440, while the preview image is displayed, the processor 200 may acquire a still image in response to the received second input. For example, the still image may be acquired by performing image processing for at least some of image frames.

According to an embodiment of the disclosure, in response to the second input (e.g., a capture request in FIG. 3) for acquiring the still image, the processor 200 may acquire a still image, based on the image frame 310 acquired from the camera 220. The processor 200 may generate metadata for the still image. For example, the metadata for the still image may include at least one of information on a time point at which the still image is acquired, information on a place where the still image is acquired, information on a device having acquired the still image, or information on at least one image frame stored in the image storage 320 within a predetermined time from the time point at which the still image is acquired.

According to an embodiment of the disclosure, in operation 450, the processor 200 may obtain a video from at least some of the image frames stored in the memory 210, corresponding to the still image. For example, operation 450 may be performed in parallel or sequentially with respect to operation 440.

According to an embodiment of the disclosure, the processor 200 may obtain a video from at least some of the image frames 310 stored in the image storage 320, corresponding to the still image. The processor 200 may obtain a video corresponding to the still image from at least some of the image frames 310 stored in the image storage 320, corresponding to the still image, based on the metadata for the still image. For example, when it is identified that there is an image frame stored in the image storage 320 within a predetermined time from the time point at which the still image is obtained, the processor 200 may obtain a video corresponding to the still image from the image frame stored in the image storage 320 within the predetermined time from the time point at which the still image is obtained. However, the image frame is not limited to only an image frame stored in the image storage 320 after the time point at which the still image is obtained, and the processor 200 may acquire a video corresponding to the still image, based on an image frame stored in the image storage within a predetermined time before and after the time point at which the still image is acquired. In addition, in obtaining a video, the processor 200 does not necessarily need to obtain the video based only on image frames adjacent to the time point at which the still image is obtained. The processor 200 may also identify a video corresponding to the still image, based on the information on the place where the still image is obtained or the information on the device having obtained the still image. For example, when the processor 200 identifies an image frame, among the image frames stored in the image storage 320, obtained within a threshold distance from the place where the still image is obtained, the processor may acquire a video, based on the identified image frame. For example, when the processor 200 identifies an image frame, among the image frames stored in the image storage 320, obtained through the same device as the device having obtained the still image, the processor may acquire a video, based on the identified image frame.

According to an embodiment of the disclosure, in operation 460, the processor 200 may store a file including the still image, the video, and metadata for the video in the memory 210.

According to an embodiment of the disclosure, the processor 200 may generate content including the still image and the video corresponding to the still image, acquired in operation 440 and operation 450. The processor 200 may store an image file including the content in the memory 210. The image file may include the content and the metadata for the video. When generating a video in which multiple videos are connected, which will be described below with reference to FIG. 6 and following figures, the processor 200 may identify a video to be connected, based on metadata for a video.

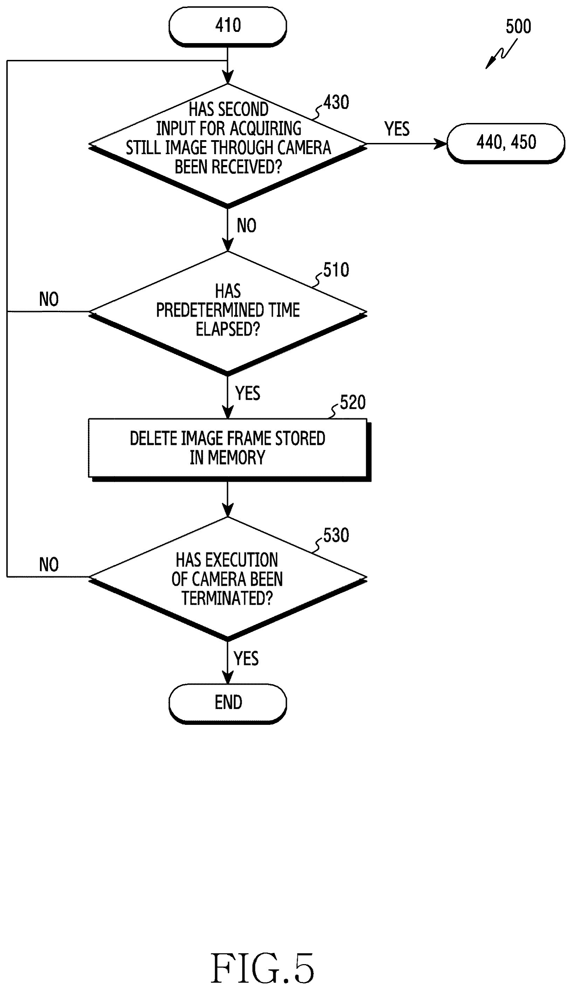

According to an embodiment of the disclosure, FIG. 5 is a flowchart 500 illustrating a process of an operation method for generating content by the electronic device 101 according to an embodiment.

According to an embodiment of the disclosure, in operation 430 of FIG. 4, the processor 200 may identify whether a second input (e.g., a capture request in FIG. 3) for acquiring a still image through the camera 220 has been received. When the processor 200 receives the second input, the processor 200 may perform operation 440 or operation 450. When the processor 200 fails to receive the second input, the processor 200 may perform operation 510.

According to an embodiment of the disclosure, in operation 510, the processor 200 may identify whether a predetermined time has elapsed after the second input is received.

According to an embodiment of the disclosure, in operation 510, the processor 200 may identify whether a predetermined time pre-configured in the electronic device 101 has elapsed from a time point at which the first input for executing the camera 220 is received. When it is determined that the predetermined time has not elapsed after the second input is received, the processor 200 may identify whether a second input has been received until the predetermined time has elapsed. In operation 510, when it is determined that the predetermined time has elapsed after the second input is received, the processor 200 may perform operation 510.

According to an embodiment of the disclosure, in operation 520, the processor 200 may delete the image frame 310 stored in the memory 210.

According to an embodiment of the disclosure, the processor 200 may delete at least some of the image frames stored in the image storage 320, based on that the second input has not been input for a designated time. For example, the processor 200 may store first image frames in the image storage 320 during a first time period. For example, the processor 200 may store second image frames in the image storage 320 during a second time period. The first image frames may include a fourth image frame, a fifth image frame, and a sixth image frame. The second image frames may include a seventh image frame, an eighth image frame, and a ninth image frame. When the processor 200 receives a second input for acquiring a still image corresponding to a time point at which the fifth image frame is acquired, the processor 200 may, for example, acquire a video including the fourth image frame, the fifth image frame, the sixth image frame, and the seventh image frame which are adjacent to the fifth image frame, based on metadata for the still image. When the processor 200 fails to receive another second input within a predetermined time after the reception of the second input for acquiring the still image corresponding to the time point at which the fifth image frame is acquired, the processor may delete the eighth image frame and the ninth image frame included in the second image frames from the image storage 320.

According to an embodiment of the disclosure, in operation 530, the processor 200 may identify whether the execution of the camera 220 has been terminated.

According to an embodiment of the disclosure, when the execution of the camera 220 has not been terminated, even after deleting image frames stored in the image storage 320 in operation 520, the processor 200 may store, in the image storage 320, the image frames 310 acquired from the camera 220 in a time period after a time period in which the deleted image frames are stored. The processor 200 may perform operation 430 in a time interval after the time period in which the deleted image frames are stored. When the execution of the camera 220 is terminated, the processor 200 may terminate the process.

FIG. 6 is a block diagram illustrating a structure for generating content by the electronic device 101 by using a still image and a video associated with the still image according to an embodiment.

According to an embodiment of the disclosure, the processor 200 may acquire preview data 600 from the camera 220. The acquired preview data 600 may include multiple image frames including the first image frame 605. The processor 200 may store the acquired preview data 600 in the image storage 320. The processor 200 may display a preview image through a display 610, based on the acquired preview data 600. The processor 200 may receive an input for acquiring a still image 630. The processor 200 may obtain a first still image 635, based on the received input.

According to an embodiment of the disclosure, the processor 200 may acquire a first video 625 corresponding to the first still image 635 from some of multiple pieces of preview data included in an image storage 620, based on metadata for the first still image 630. For example, the processor 200 may identify a first image frame 615 which is an image frame stored in the image storage 320 at a time point adjacent to a time point at which the first still image 635 is acquired. In addition, the processor 200 may obtain a video including a second image frame and a third image frame stored in the image storage 620 within a predetermined time from the time point at which the first still image 635 is acquired.

According to an embodiment of the disclosure, when the processor 200 identifies the first image frame 615, based on the metadata of the first still image 635, the first still image 635 is not limited to being temporally adjacent to the first frame 615. For example, based on a determination that a place where the first still image 635 is acquired and a place where the first image frame 615 is stored are positioned within a threshold distance, the processor 200 may identify the first image frame 615 corresponding to the first still image 635. For example, based on the fact that a device having acquired the first still image 635 and a device in which the first image frame 615 is stored are the same, the processor 200 may identify the first image frame 615 corresponding to the first still image 635.

According to an embodiment of the disclosure, when an input for acquiring a second still image is received within a predetermined time after the input for acquiring the first still image 635, the processor 200 may identify the third image frame, based on metadata for the second still image. The processor 200 may acquire a second video including the third image frame. As illustrated in FIG. 6, the second video is not required to include the third image frame included in the first video 625.

According to an embodiment of the disclosure, the processor 200 may generate first content 640 including the first still image 635 and the first video 625 corresponding to the first still image 635. The processor 200 may store the generated first content 640 in the memory.

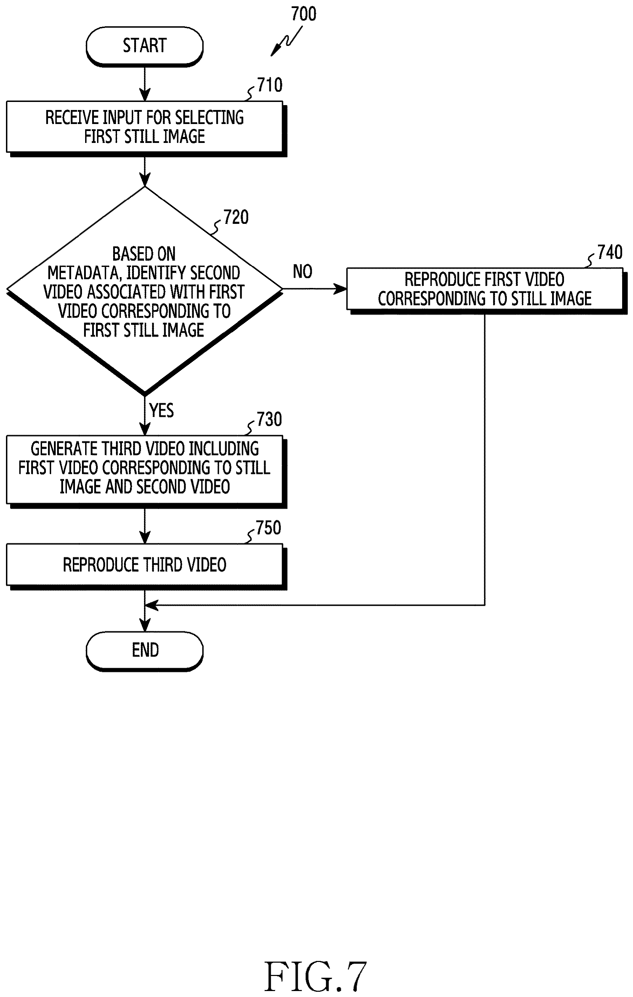

According to an embodiment of the disclosure, FIG. 7 is a flowchart 700 illustrating a process of an operation method for generating a continuously reproducible video by the electronic device 101, based on multiple videos according to an embodiment.

According to an embodiment of the disclosure, in operation 710, the processor 200 may receive an input for selecting a first still image. The processor 200 may receive an input for selecting the first still image from among multiple still images stored in the memory 210. The input for selecting the first still image may include an input for selecting a first video corresponding to the first still image.

According to an embodiment of the disclosure, in operation 720, the processor 200 may identify, based on the metadata, a second video associated with the first video corresponding to the first still image.

According to an embodiment of the disclosure, a first image file may include first content and first metadata for the first video. A second image file may include second content and second metadata for the second video. For example, the metadata for a video may include at least one of information on a time point at which at least one image frame included in the video is acquired, information on a place where the at least one image frame is acquired, information on a device having acquired the at least one image frame, and information on a frame adjacent to the at least one image frame.

According to an embodiment of the disclosure, the first image file may include the second content and the second metadata for the second video. For example, the processor 200 may identify the second video associated with the first video, based on the second metadata included in the second image file.

According to an embodiment of the disclosure, each of multiple image files may include metadata for the video and the content included in a corresponding image file. The processor 200 may identify associated videos, based on respective pieces of metadata included in multiple image files.

According to an embodiment of the disclosure, the processor 200 may identify the second video associated with the first video, based on the first metadata or the second metadata. For example, when the second video includes at least one frame acquired within a predetermined time from a time point at which at least one frame included in the first video is acquired, the processor 200 may identify the second video as a video associated with the first video. For example, when the second video includes at least one frame acquired within a threshold distance from a place where at least one frame included in the first video is acquired, the processor 200 may identify the second video as a video associated with the first video. For example, when the second video includes at least one frame acquired from the same device as a device having acquired at least one frame included in the first video, the processor 200 may identify the second video as a video associated with the first video.

According to an embodiment of the disclosure, when identification of the second video associated with the first video has failed, the processor 200 may reproduce the first video corresponding to the still image through the display 230 in operation 740.

According to an embodiment of the disclosure, in operation 730, the processor 200 may generate a third video including the first video corresponding to the first still image and the second video. The processor 200 may generate the third video in which the first video and the second video are connected. For example, when the first video and the second video include at least one identical frame, the processor may generate the third video by removing the at least one identical frame. For example, when the first video and the second video do not include at least one identical frame, the processor 200 may generate the third video by inserting a designated effect between the first video and the second video.

According to an embodiment of the disclosure, in operation 750, the processor 200 may reproduce the third video. The processor 200 may reproduce the third video generated in operation 730 through the display 230.

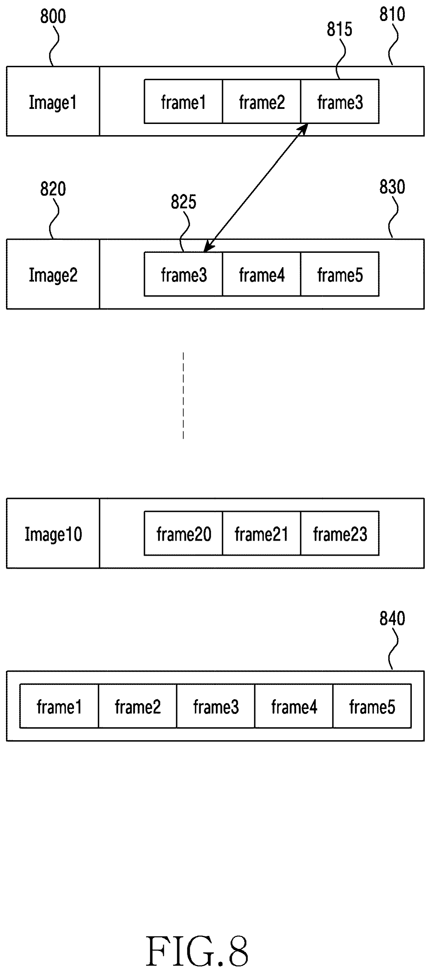

According to an embodiment of the disclosure, FIG. 8 is a block diagram illustrating a structure for generating a continuously reproducible video by the electronic device 101, based on multiple videos according to an embodiment.

According to an embodiment of the disclosure, first content may include a first still image 800, a first video 810 corresponding to the first still image, and first metadata for the first video 810. The first video 810 may include multiple frames (e.g., frame 1, frame 2, and frame 3). Second content may include a second still image 820, a second video 830 corresponding to the second still image 820, and second metadata for the second video 830. The second video 830 may include multiple frames (e.g., frame 3, frame 4, and frame 5).

According to an embodiment of the disclosure, the processor 200 may generate a third video 840 by connecting the multiple frames included in the first video 810 and the multiple frames included in the second video 830. The processor 200 may generate the third video 840, based on the first metadata for the first video 810 or the second metadata for the second video 830. For example, the metadata may include at least one of information on time points at which multiple frames included in a video are acquired, information on places where the multiple frames are acquired, information on devices having acquired the multiple frames, and information on frames adjacent to the multiple frames.

According to an embodiment of the disclosure, the processor 200 may identify, based on the first metadata, the second video 830 including a third frame 825 overlapping with a third frame 815 among the multiple frames included in the first video 810. The processor 200 may remove one of the redundant third frames 815 or 825 and connect the first video 810 and the second video 830 to generate the third video 840.

According to an embodiment of the disclosure, even when the third frame 825 included in the second video 830 is not the same frame as the third frame 815 included in the first video 810, the processor 200 may identify, based on the first metadata, the second video 820 associated with the first video 810. For example, when the third frame 825 is obtained within a predetermined time from a time point at which the third frame 815 is obtained, the processor 200 may identify the second video 830 associated with the first video 810, based on the first metadata. For example, when the third frame 825 is obtained at a place within a threshold distance from a place where the third frame 815 is obtained, the processor 200 may identify the second video 830 associated with the first video 810, based on the first metadata. For example, when the third frame 825 is obtained in the same device as a device by which the third frame 815 is obtained, the processor 200 may identify the second video 830 associated with the first video 810, based on the first metadata. When the third frame 315 and the third frame 825 are not redundant frames, a time interval may exist between the first video 810 and the second video 820, and thus the processor 200 may generate the third video 840 by inserting a designated effect for eliminating the time interval.

According to an embodiment of the disclosure, with reference to FIG. 8, only the operation of generating the third video 840 by connecting only two videos including the first video 810 and the second video 830 has been described, but the disclosure may not be limited thereto. For example, when a fourth video associated with the second video 830 is identified, the processor 200 may generate the third video 840 in which the fourth video is connected to the first video 810 and the second video 830. There is no limit to the number of videos used to generate the third video 840, and videos are successively connected according to identification of associated videos.

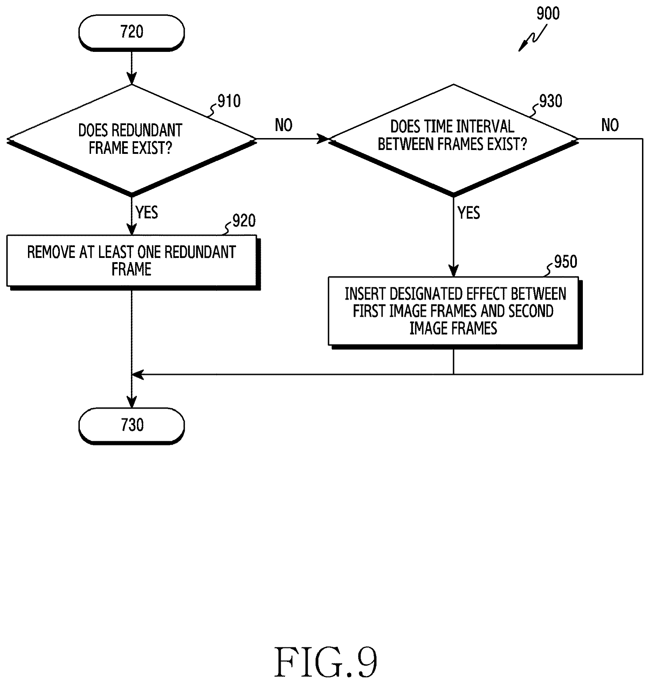

According to an embodiment of the disclosure, FIG. 9 is a flowchart 900 illustrating a process of a method of removing redundant frames, by the electronic device 10, in generating a continuously reproducible video according to an embodiment.

According to an embodiment of the disclosure, in operation 910, the processor 200 may identify whether there is a redundant frame in the first video and the second video according to identification of, by the processor 200, the second video associated with the first video in operation 720. For example, when the second video includes at least some of the frames included in the first video, the processor 200 may determine that the second video includes a redundant frame. When the existence of a redundant frame is identified, the processor 200 may perform operation 920.

According to an embodiment of the disclosure, in operation 920, the processor 200 may remove at least one redundant frame. For example, when the second video includes at least some of the frames included in the first video, the processor 200 may remove the redundant frames from one of the first video or the second video. The processor 200 may generate a third video in which the first video and the second video are connected, by using an image in which redundant frames has been removed from one of the first video or the second video.

According to an embodiment of the disclosure, when, in operation 910, the processor 200 has failed to identify that the first video and the second video include at least some redundant frames, the processor may identify whether there is a time interval between frames in operation 930. For example, the processor may determine whether there exists a time interval between the last frame of the first video and the start frame of the second video. According to determination that the time interval substantially does not exist, the processor 200 may generate a third video in which the first video and the second video are connected.

According to an embodiment of the disclosure, according to determination that the time interval exists in operation 930, the processor 200 may insert a designated effect between the first video and the second video in operation 950. For example, the processor may insert an animation effect between the last frame among first image frames included in the first video and the start frame among second image frames included in the second video. The processor 200 may insert an animation effect between the first video and the second video, thereby preventing a discontinuity between the videos due to the time interval.

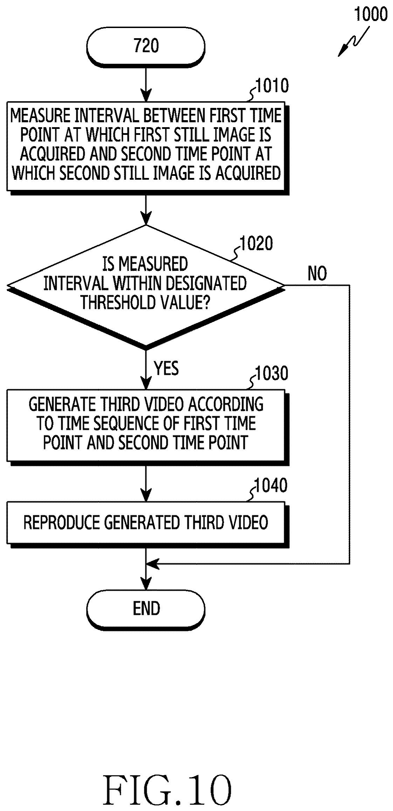

According to an embodiment of the disclosure, FIG. 10 is a flowchart 1000 illustrating a process of a method of generating a continuously reproducible video by the electronic device 101, based on a time interval between multiple videos according to an embodiment.

According to an embodiment of the disclosure, in operation 1010, the processor 200 may measure a time interval between a first time point at which a first image frame is acquired and a second time point at which a second image frame is acquired. The processor 200 may identify time points at which the first image frames included in the first video are obtained, based on the metadata for the first video. The processor 200 may identify time points at which the second image frames included in the second video are obtained, based on the metadata for the second video. For example, the processor 200 may measure a time interval between a first time point at which the last frame among the first image frames is acquired and a second time point at which the start frame among the second image frames is acquired.

According to an embodiment of the disclosure, in operation 1020, the processor 200 may identify whether the measured time interval is within a designated threshold value. For example, when it is determined that the measured time interval exceeds a threshold value pre-configured in the electronic device 101, the processor 200 may identify the second video as a video that is unconnectable to the first video. For example, even when the processor 200 determines that the measured time interval exceeds the threshold value pre-configured in the electronic device 101, if the first video and the second video include at least one redundant frame, the processor 200 may determine whether a time interval between the start frame of the first video and the start frame of the second video is within a threshold value. If the processor 200 determines that the time interval between the start frame of the first video and the start frame of the second video is within a threshold value, the processor 200 may identify the second video as a video connectable to the first video. For example, when it is determined that the measured time interval is equal to or smaller than a threshold value pre-configured in the electronic device 101, the processor 200 may identify the second video as a video that is unconnectable to the first video.

According to an embodiment of the disclosure, in operation 1030, the processor 200 may generate a third video according to a time sequence of the first time point and the second time point. The processor 200 may generate a third video in which the first video and the second video are connected in a time sequence, according to identification that the time interval between the first video and the second video is less than or equal to a threshold value pre-configured in the electronic device 101. For example, when the first video and the second video include at least some redundant frames, the processor 200 may generate the third video by removing the redundant frames. For example, when it is determined that a time interval within a pre-configured threshold value exists between the first video and the second video, the processor 200 may generate the third video by inserting a designated animation effect between the first video and the second video.

According to an embodiment of the disclosure, in operation 1040, the processor 200 may generate the generated third video. The processor 200 may reproduce, through the display 230, the third video in which the first video and the second video are connected in a time sequence.

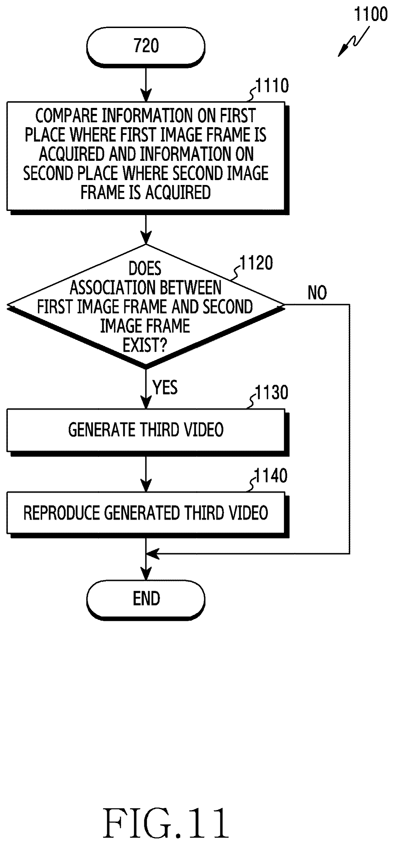

According to an embodiment of the disclosure, FIG. 11 is a flowchart 1100 illustrating a process of a method of generating a continuously reproducible video by the electronic device 101, based on information on places where multiple videos are obtained according to an embodiment.

According to an embodiment of the disclosure, in operation 1110, the processor 200 may compare information on a first place where a first image frame is acquired and information on a second place where a second image frame is acquired. The processor 200 may identify information on a place where the first image frame included in the first video is obtained, based on the metadata for the first video. The first image frame may include at least one frame. The processor 200 may identify information on a place where the second image frame included in the second video is obtained, based on the metadata for the second video. The second image frame may include at least one frame. For example, information on a place where image frames are obtained, which is included in metadata, may include information indicating the address of the place, and information on a place where an associated frame is obtained. For example, the processor 200 may measure a physical distance between the first place and the second place, based on the information on the first place where the first image frame is acquired and the second place where the second image frame is acquired. For example, when the processor 200 identifies an object (e.g., a building) included in the first image frame and an object (e.g., a building) included in the second image frame and the same object is identified, the processor may identify the first place and the second place as the same place.

According to an embodiment of the disclosure, in operation 1120, the processor 200 may identify whether there is an association between the first image frame and the second image frame. Based on the information identified in operation 1110, the processor 200 may identify whether there is an association between the first image frame and the second image frame. The processor 200 may terminate the process according to determination that there is no association between the first image frame and the second image frame.

According to an embodiment of the disclosure, according to determination, by the processor 200, that the measured physical distance value between the first place and the second place is within a threshold value pre-configured in the electronic device 101, the processor 200 may determine that the first image frame and the second image frame have an association, by identifying the first image frame and the second image frame as frames obtained at the same place or adjacent places. The processor 200 may determine a similarity with an object included in the second image frame, based on a type of an object included in the first image frame, a layout composition, or an angle of view, and when the similarity is identified to be within a threshold value pre-configured in the electronic device 101, the processor 200 may determine that the first image frame and the second image frame have an association, by identifying the first image frame and the second image frame as frames obtained at the same place or adjacent places.

According to an embodiment of the disclosure, in operation 1130, the processor 200 may generate a third video. Operation 1130 may correspond to operation 1030 of FIG. 10.

According to an embodiment of the disclosure, in operation 1140, the processor 200 may reproduce the generated third video. Operation 1140 may correspond to operation 1040 of FIG. 10.

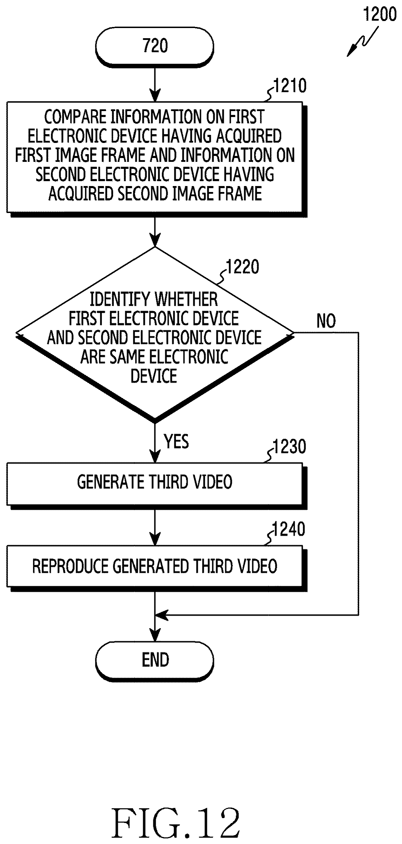

According to an embodiment of the disclosure, FIG. 12 is a flowchart 1200 illustrating a process of a method of generating a continuously reproducible video, based on information on electronic devices by which multiple videos are obtained according to an embodiment.

According to an embodiment of the disclosure, in operation 1210, the processor 200 may compare information on a first electronic device having acquired a first image frame and information on a second electronic device having acquired a second image frame. The processor 200 may compare, based on the first metadata for the first video and the second metadata for the second video, the information on the first electronic device by which the first image frame is acquired and the information on the second electronic device by which the second image frame is acquired. For example, the metadata may include unique identification information of an electronic device having obtained an image frame.

According to an embodiment of the disclosure, in operation 1220, the processor 200 may identify whether the first electronic device and the second electronic device are the same electronic device. The processor 200 may terminate the process according to identification that the first electronic device having obtained the first image frame and the second electronic device having obtained the second image frame are not the same electronic device. The processor 200 may determine that the first image frame and the second image frame have an association according to identification that unique identification information of the first electronic device having acquired the first image frame and unique identification information of the second electronic device having acquired the second image frame are the same.

According to an embodiment of the disclosure, in operation 1230, the processor 200 may generate a third video. Operation 1230 may correspond to operation 1030 of FIG. 10 or operation 1130 of FIG. 11.

According to an embodiment of the disclosure, in operation 1240, the processor 200 may reproduce the generated third video. Operation 1240 may correspond to operation 1040 of FIG. 10 or operation 1140 of FIG. 11.

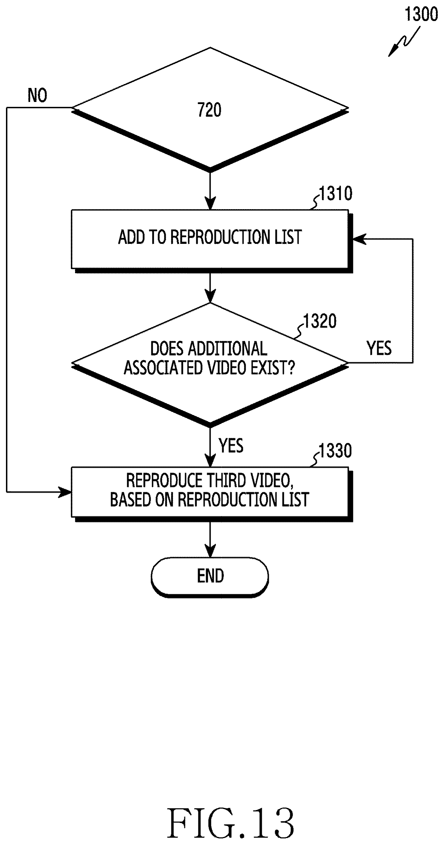

According to an embodiment of the disclosure, FIG. 13 is a flowchart 1300 illustrating a process of a method of generating a continuously reproducible reproduction list by the electronic device 101 by using multiple videos according to an embodiment.

According to an embodiment of the disclosure, the processor 200 may perform operation 1310 according to identification, by the processor 200, of a second video associated with the first video in operation 720. The processor 200 may perform operation 1330 according to a failure in identifying a second video associated with the first video in operation 720.

According to an embodiment of the disclosure, in operation 1310, the processor 200 may add the second video to a reproduction list. The processor 200 may add the second video to the reproduction list when the second video is identified as a video associated with the first video, based on the first metadata for the first video or the second metadata for the second video.

According to an embodiment of the disclosure, in operation 1320, the processor 200 may identify whether there is an additional video associated with the second video. The processor 200 may identify, based on the metadata for the second video added to the reproduction list, whether a video associated with the second video exists. When there is an additional associated video, the processor 200 may repeatedly perform operation 1310 to add a new video to the reproduction list until there is no video to be added. The processor 200 may perform operation 1330 when the video associated with the second video is not identified.

According to an embodiment of the disclosure, in operation 1330, the processor 200 may reproduce a video, based on the reproduction list. The processor 200 may perform operation 1320, thereby enabling the processor 200 to reproduce the videos added to the reproduction list. In reproducing an associated video, the processor 200 may additionally perform an operation of removing a redundant frame between videos, or inserting a designated effect in order to prevent a discontinuity caused by a time interval between videos.

According to an embodiment of the disclosure, based on repeatedly performing operation 1310 or operation 1320 of FIG. 13, the processor 200 may collectively reproduce videos having an association.

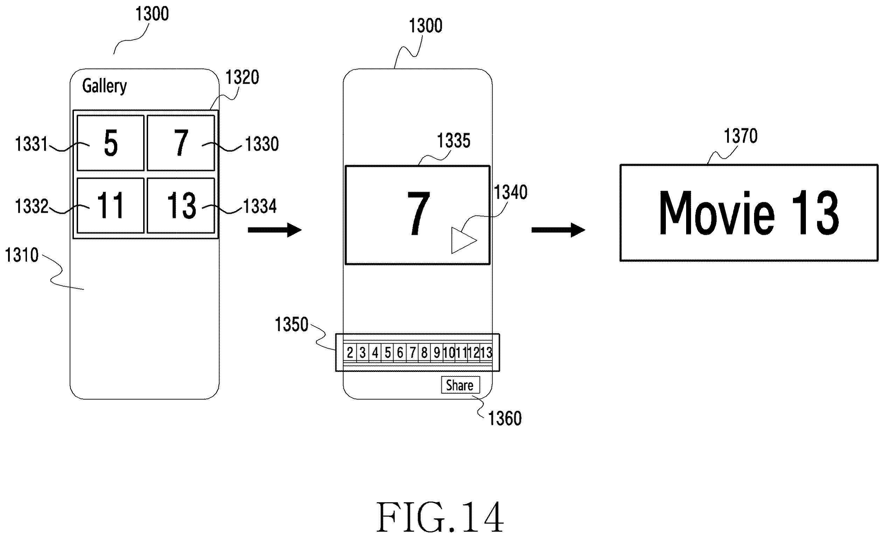

FIG. 14 is a diagram illustrating an example of a visual object for generating a new video by connecting multiple videos, and sharing the generated new video according to an embodiment.

According to an embodiment of the disclosure, the processor 200 may store multiple still images 1320 in an electronic device 1300. The processor 200 may, in response to an input for selecting a file in which multiple still images 1320 are stored, display the multiple still images 1320 on a display 1310.

According to an embodiment of the disclosure, the multiple still images 1320 may be still images that are associated with each other, based on metadata. For example, a first still image 1330, a second still image 1331, a third still image 1332, and a fourth still image 1333 may be mutually associated still images. The processor 200 may identify associated still images, based on metadata. For example, the metadata may include information on an electronic device by which a still image is obtained, information on a place where the still image is obtained, and information on a time at which the still image is obtained. The processor 200 may store the identified still images together in a single file.

According to an embodiment of the disclosure, in response to an input for selecting the first still image 1330 among the multiple still images 1320, the processor 200 may display a first video 1335 corresponding to the first still image 1330 on the display 1310. The processor 200 may display, on the display 1310, a first visual object 1340 for reproducing the first video 1335 and a second visual object 1350 for visually showing frames to be continuously reproduced. A position at which the first visual object 1340 or the second visual object 1350 is displayed on the display 1310 is not limited to the example of FIG. 14, but may be appropriately changed and displayed within a range for accomplishing a purpose.

In an embodiment of the disclosure, in response to an input for selecting the first visual object 1340, the processor 200 may continuously reproduce associated videos. For example, in response to an input for selecting the first visual object 1340 for reproducing the first video 1335, the processor 200 may continuously reproduce a plurality of videos associated with the first video 1330, based on a time sequence. For example, in response to an input for selecting the first visual object 1340, the processor 200 may reproduce videos including a second video corresponding to the second still image 1331, a third video corresponding to the third still image 1332, a fourth video corresponding to the fourth still image 1333, and the first video 1335 corresponding to a first still image 1330 in that order. The processor 200 may display the videos to be continuously reproduced as a second visual object 1350 on the display 1310, based on a frame sequence.

In an embodiment of the disclosure, the processor 200 may display a third visual object 1360 for sharing the associated videos on the display 1310. In response to an input for selecting the third visual object 1360, the processor 200 may generate a new video 1370 in which the associated videos are connected. For example, in response to an input for selecting the third visual object 1360, the processor 200 may generate a new video 1370 by connecting the mutually associated videos (e.g., the first video, the second video, the third video, and the fourth video). The processor 200 may transmit the generated new video 1370 to an external electronic device.

According to an embodiment of the disclosure, an electronic device may provide a method enabling encoding of an image and a video corresponding to the image by using metadata during or after capturing.

According to an embodiment of the disclosure, an electronic device may provide a method enabling reproduction of associated videos through a single input by using metadata between videos.

According to an embodiment of the disclosure, an electronic device (e.g., the electronic device 101 in FIG. 1) may include a memory (e.g., the memory 210 in FIG. 2) configured to store a first image file including a first still image (e.g., the first still image 635 in FIG. 6), a first video (e.g., the first video 640 in FIG. 6) associated with the first still image (e.g., the first still image 635 in FIG. 6), and first metadata, and a second image file including a second still image (e.g., the second still image 820 in FIG. 8), a second video (e.g., the second video 830 in FIG. 8) associated with the second still image (e.g., the second still image 820 in FIG. 8), and second metadata, and at least one processor (e.g., the processor 200 in FIG. 2) operatively connected to the memory (e.g., the memory 210 in FIG. 2). The at least one processor (e.g., the processor 200 in FIG. 2) may execute instructions stored in the memory (e.g., the memory 210 in FIG. 2) to receive a first input for selecting the first still image (e.g., the first still image 635 in FIG. 6). The at least one processor (e.g., the processor 200 in FIG. 2) may identify the second video associated with the first video, based on at least one of the first metadata or the second metadata. The at least one processor (e.g., the processor 200 in FIG. 2) may reproduce a third video in which at least some of first image frames included in the first video and at least some of second image frames included in the second video are reproduced continuously.

According to an embodiment of the disclosure, the at least one processor (e.g., the processor 200 in FIG. 2) may, in reproducing the third video, in case that it is identified that the at least some of the first image frames and the at least some of the second image frames include at least one identical frame, remove the at least one identical frame to reproduce the third video.

According to an embodiment of the disclosure, the at least one processor (e.g., the processor 200 in FIG. 2) may be configured to, in reproducing the third video, in case that it is identified that the at least some of the first image frames and the at least some of the second image frames do not include at least one identical frame, insert a designated effect between the at least some of the first image frames and the at least some of the second image frames to reproduce the third video.

According to an embodiment of the disclosure, the first metadata may include information on a first time point at which the first still image (e.g., the first still image 635 in FIG. 6) is obtained. The second metadata may include information on a second time point at which the second still image is obtained. The at least one processor (e.g., the processor 200 in FIG. 2) may measure an interval between the second time point at which the second still image is obtained and the first time point at which the first still image (e.g., the first still image 635 in FIG. 6) is obtained. The at least one processor (e.g., the processor 200 in FIG. 2) may determine whether the measured interval is within a designated threshold value. The at least one processor may, according to determination that the measured interval is within the designated threshold value, identify the second video, based on at least one of the first metadata or the second metadata.

According to an embodiment of the disclosure, the at least one processor (e.g., the processor 200 in FIG. 2) may reproduce a third video in which at least some of the first image frames included in the first video and at least some of the second image frames included in the second video are reproduced continuously according to a time sequence of the first time point and the second time point.

According to an embodiment of the disclosure, the first metadata may include information on a first place where the first still image (e.g., the first still image 635 in FIG. 6) is obtained. The second metadata may include information on a second place where the second still image is obtained. The at least one processor (e.g., the processor 200 in FIG. 2) may compare the information on the first place with the information on the second place. The at least one processor may, according to determination that a result of the comparison satisfies a pre-configured criterion, reproduce a third video in which at least some of the first image frames included in the first video and at least some of the second image frames included in the second video are reproduced continuously.

According to an embodiment of the disclosure, the first metadata may include information on a first electronic device having obtained the first still image (e.g., the first still image 635 in FIG. 6) and information on a second electronic device having obtained the second still image. The at least one processor (e.g., the processor 200 in FIG. 2) may determine whether the first electronic device and the second electronic device are identical to each other. The at least one processor (e.g., the processor 200 in FIG. 2) may, according to determination that the first electronic device and the second electronic device are identical to each other, reproduce a third video in which at least some of the first image frames included in the first video and at least some of the second image frames included in the second video are reproduced continuously.

According to an embodiment of the disclosure, an electronic device (e.g., the electronic device 101 in FIG. 1) may include at least one camera (e.g., the camera 220 in FIG. 2), a display (e.g., the display 230 in FIG. 2), a memory (e.g., the memory 210 in FIG. 2), and at least one processor (e.g., the processor 200 in FIG. 2) operatively connected to the display (e.g., the display 230 in FIG. 2), the memory (e.g., the memory 210 in FIG. 2), and the at least one camera (e.g., the camera 220 in FIG. 2). The at least one processor (e.g., the processor 200 in FIG. 2) may execute instructions stored in the memory (e.g., the memory 210 in FIG. 2) to, in response to a first input for executing the at least one camera (e.g., the camera 220 in FIG. 2), display, through the display (e.g., the display 230 in FIG. 2), a preview image obtained from at least one image frame output from the at least one camera (e.g., the camera 220 in FIG. 2). The at least one processor (e.g., the processor 200 in FIG. 2) may store the at least one image frame in the memory (e.g., the memory 210 in FIG. 2) while displaying the preview image through the display (e.g., the display 230 in FIG. 2). The at least one processor (e.g., the processor 200 in FIG. 2) may acquire a first still image (e.g., the first still image 635 in FIG. 6) through at least some of the at least one camera (e.g., the camera 220 in FIG. 2) in response to a second input for capturing a still image received while displaying the preview image. The at least one processor (e.g., the processor 200 in FIG. 2) may generate a first video from at least some of the stored at least one image frame, corresponding to the first still image. The at least one processor (e.g., the processor 200 in FIG. 2) may store, in the memory (e.g., the memory 210 in FIG. 2), a first file including the first still image (e.g., the first still image 635 in FIG. 6), the first video, and first metadata for the first video.

According to an embodiment of the disclosure, at least one frame may include a first preview image frame corresponding to a first time point, a second preview image frame corresponding to a second time point, and a third preview image frame corresponding to a third time point. The memory may store the at least one frame during a time period including the first time point, the second time point, and the third time point. The at least one processor (e.g., the processor 200 in FIG. 2) may, based on the second input being input before the first time point, generate the first video, based on first image frames including the first preview image frame and the second preview image frame. The at least one processor (e.g., the processor 200 in FIG. 2) may, in response to a third input for capturing a still image received between the first time point and the second time point, acquire a second still image through at least some of the at least one camera. The at least one processor (e.g., the processor 200 of FIG. 2) may generate a second video, based on second image frames including the second preview image frame and the third preview image frame. The at least one processor (e.g., the processor 200 of FIG. 2) may store a second file including the second still image, the second video, and second metadata for the second video in the memory.

According to an embodiment of the disclosure, the at least one processor (e.g., the processor 200 of FIG. 2) may delete at least one image frame stored in the memory, based on a specified time period having elapsed from a time point at which an input for capturing a still image (e.g., the first still image 635 of FIG. 6) is received.

According to an embodiment of the disclosure, the at least one processor (e.g., the processor 200 of FIG. 2) may, when the third input is received within a predetermined time while displaying the preview image, continuously store at least one image frame in the memory while displaying the preview image through the display. The at least one processor (e.g., the processor 200 in FIG. 2) may, in response to the third input received while displaying the preview image, acquire a second still image through the at least one camera. The at least one processor (e.g., the processor 200 in FIG. 2) may generate a second video from at least some of the stored at least one image frame, corresponding to the second still image. The at least one processor (e.g., the processor 200 of FIG. 2) may store a second file including the second still image, the second video, and metadata for the second video in the memory.

According to an embodiment of the disclosure, the at least one processor (e.g., the processor 200 of FIG. 2) may generate metadata for the first still image (e.g., the first still image 635 of FIG. 6) including at least one of pieces of information on a time point at which the first still image (e.g., the first still image 635 of FIG. 6) is acquired, a place where the first still image is acquired, and a device by which the first still image is acquired, and store the metadata in the memory. The at least one processor may generate the first video from at least some of the stored at least one image frame, corresponding to the first still image (e.g., the first still image 635 of FIG. 6), based on the stored metadata for the first still image.

According to an embodiment of the disclosure, an operation method of an electronic device (e.g., the electronic device 101 in FIG. 1) may include receiving a first input for selecting a first still image (e.g., the first still image 635 of FIG. 6), identifying a second video associated with a first video, based on at least one of first metadata or second metadata, and reproducing a third video in which at least some of first image frames included in the first video and at least some of second image frames included in the second video are reproduced continuously. The first video may be associated with the first still image (e.g., the first still image 635 in FIG. 6), the second video may be associated with a second still image, the first still image (e.g., the first still image 635 in FIG. 6), the first video associated with the first still image (e.g., the first still image 635 in FIG. 6), and the first metadata may be included in a first image file, and the second still image, the second video associated with the second still image, and the second metadata may be included in a second image file.

According to an embodiment of the disclosure, in the operation method of the electronic device (e.g., the electronic device 101 in FIG. 1), the reproducing of the third video may further include identifying whether the at least some of the first image frames and the at least some of the second image frames include at least one identical frame, and according to identification that the at least some of the first image frames and the at least some of the second image frames include the at least one identical frame, removing the at least one identical frame to reproduce the third video.

According to an embodiment of the disclosure, in the operation method of the electronic device (e.g., the electronic device 101 in FIG. 1), the identifying of whether the at least some of the first image frames and the at least some of the second image frames include the at least one identical frame may further include, according to identification that the at least some of the first image frames and the at least some of the second image frames do not include the at least one identical frame, inserting a designated effect between the at least some of the first image frames and the at least some of the second image frames to reproduce the third video.

According to an embodiment of the disclosure, in the operation method of the electronic device (e.g., the electronic device 101 in FIG. 1), the first metadata may include information on a first time point at which the first still image is obtained, and the second metadata may include information on a second time point at which the second still image is obtained. The operation method of the electronic device may further include measuring an interval between the second time point at which the second still image is obtained and the first time point at which the first still image (e.g., the first still image 635 in FIG. 6) is obtained, determining whether the measured interval is within a designated threshold value, and according to determination that the measured interval is within the designated threshold value, identifying the second video, based on at least one of the first metadata or the second metadata.

According to an embodiment of the disclosure, the operation method of the electronic device (e.g., the electronic device 101 in FIG. 1) may further include reproducing a third video in which at least some of the first image frames included in the first video and at least some of the second image frames included in the second video are reproduced continuously according to a time sequence of the first time point and the second time point.

According to an embodiment of the disclosure, the first metadata may include information on a first place where the first still image (e.g., the first still image 635 in FIG. 6) is obtained, and the second metadata may include information on a second place where the second still image is obtained. The operation method of the electronic device (e.g., the electronic device 101 in FIG. 1) may further include comparing the information on the first place with the information on the second place, and according to determination that a result of the comparison satisfies a pre-configured criterion, reproducing a third video in which at least some of the first image frames included in the first video and at least some of the second image frames included in the second video are reproduced continuously.

According to an embodiment of the disclosure, the first metadata may include information on a first electronic device having obtained the first still image (e.g., the first still image 635 in FIG. 6) and information on a second electronic device having obtained the second still image. The operation method of the electronic device (e.g., the electronic device 101 in FIG. 1) may further include determining whether the first electronic device and the second electronic device are identical to each other, and according to determination that the first electronic device and the second electronic device are identical to each other, reproducing a third video in which at least some of the first image frames included in the first video and at least some of the second image frames included in the second video are reproduced continuously.

According to an embodiment of the disclosure, in the operation method of the electronic device (e.g., the electronic device 101 in FIG. 1), metadata for the first still image (e.g., the first still image 635 in FIG. 6) may further include information on at least some of the second image frames included in the second video.

According to an embodiment of the disclosure, the electronic device may encode a video stored in the memory with an image by utilizing metadata even while acquiring the image through capturing using the camera, thereby shortening a time required to encode the video corresponding to the image immediately after acquiring the image.

According to an embodiment of the disclosure, the electronic device may enable a user to reproduce and watch associated videos at once by utilizing metadata, thereby enhancing user experience.

According to an embodiment of the disclosure, when editing an image or a video, the electronic device may connect a first video corresponding to a second video used for editing to the second video, based on metadata, without a need to separately extract the first video corresponding to a first image, thereby reducing user inconvenience.

Various other effects identified directly or indirectly through the disclosure may be provided.

## Claims

1. An electronic device comprising:
a memory configured to store a first image file including a first still image, a first video associated with the first still image, and first metadata, and a second image file including a second still image, a second video associated with the second still image, and second metadata, and to store instructions; and
at least one processor,
wherein the instructions stored in the memory, when executed by the at least one processor, cause the electronic device to:
receive a first input for selecting the first still image;
identify the second video associated with the first video, based on at least one of the first metadata or the second metadata; and
reproduce a third video in which at least some of first image frames included in the first video and at least some of second image frames included in the second video are reproduced continuously.

2. The electronic device of claim 1, wherein the instructions, when executed by the at least one processor, cause the electronic device to, in reproducing the third video, in case that it is identified that the at least some of the first image frames and the at least some of the second image frames include at least one identical frame, remove the at least one identical frame to reproduce the third video.

3. The electronic device of claim 1, wherein the instructions, when executed by the at least one processor (200), cause the electronic device to, in reproducing the third video, in case that it is identified that the at least some of the first image frames and the at least some of the second image frames do not include at least one identical frame, insert a designated effect between the at least some of the first image frames and the at least some of the second image frames to reproduce the third video.

4. The electronic device of claim 1, wherein the first metadata comprises information on a first time point at which the first still image is obtained, and the second metadata comprises information on a second time point at which the second still image is obtained, and
wherein the instructions, when executed by the at least one processor, cause the electronic device to:
measure an interval between the second time point at which the second still image is obtained and the first time point at which the first still image is obtained;
determine whether the measured interval is within a designated threshold value; and
according to determination that the measured interval is within the designated threshold value, identify the second video, based on at least one of the first metadata or the second metadata.

5. The electronic device of claim 4, wherein the instructions, when executed by the at least one processor (200), cause the electronic device to reproduce a third video in which at least some of the first image frames included in the first video and at least some of the second image frames included in the second video are reproduced continuously according to a time sequence of the first time point and the second time point.

6. The electronic device of claim 1, wherein the first metadata comprises information on a first place where the first still image is obtained, and the second metadata comprises information on a second place where the second still image is obtained, and
wherein the instructions, when executed by the at least one processor, cause the electronic device to:
compare the information on the first place with the information on the second place; and
according to determination that a result of the comparison satisfies a pre-configured criterion, reproduce a third video in which at least some of the first image frames included in the first video and at least some of the second image frames included in the second video are reproduced continuously.

7. The electronic device of claim 1, wherein the first metadata comprises information on a first electronic device having obtained the first still image and information on a second electronic device having obtained the second still image, and
wherein the instructions, when executed by the at least one processor (200), cause the electronic device to:
determine whether the first electronic device and the second electronic device are identical to each other; and
according to determination that the first electronic device and the second electronic device are identical to each other, reproduce a third video in which at least some of the first image frames included in the first video and at least some of the second image frames included in the second video are reproduced continuously.

8. An operation method of an electronic device, the operation method comprising:
receiving a first input for selecting a first still image;
identifying a second video associated with a first video, based on at least one of first metadata or second metadata; and
reproducing a third video in which at least some of first image frames included in the first video and at least some of second image frames included in the second video are reproduced continuously,
wherein the first video is associated with the first still image and the second video is associated with a second still image, and
wherein the first still image, the first video associated with the first still image, and the first metadata are included in a first image file, and the second still image, the second video associated with the second still image, and the second metadata are included in a second image file.

9. The operation method of claim 8, wherein the reproducing of the third video further comprises:
identifying whether the at least some of the first image frames and the at least some of the second image frames include at least one identical frame; and
according to identification that the at least some of the first image frames and the at least some of the second image frames include the at least one identical frame, removing the at least one identical frame to generate the third video.

10. The operation method of claim 9, wherein the identifying of whether the at least some of the first image frames and the at least some of the second image frames include the at least one identical frame further comprises, according to identification that the at least some of the first image frames and the at least some of the second image frames do not include the at least one identical frame, inserting a designated effect between the at least some of the first image frames and the at least some of the second image frames to generate the third video.

11. The operation method of claim 8, wherein the first metadata comprises information on a first time point at which the first still image is obtained, and the second metadata comprises information on a second time point at which the second still image is obtained, and
wherein the operation method further comprises:
measuring an interval between the second time point at which the second still image is obtained and the first time point at which the first still image is obtained;
determining whether the measured interval is within a designated threshold value; and
according to determination that the measured interval is within the designated threshold value, identifying the second video, based on at least one of the first metadata or the second metadata.

12. The operation method of claim 11, further comprising generating a third video in which at least some of the first image frames included in the first video and at least some of the second image frames included in the second video are reproduced continuously according to a time sequence of the first time point and the second time point.

13. The operation method of claim 8, wherein the first metadata comprises information on a first place where the first still image is obtained, and the second metadata comprises information on a second place where the second still image is obtained, and
wherein the operation method further comprises:
comparing the information on the first place with the information on the second place; and
according to determination that a result of the comparison satisfies a pre-configured criterion, generating a third video in which at least some of the first image frames included in the first video and at least some of the second image frames included in the second video are reproduced continuously.

14. The operation method of claim 8, wherein the first metadata comprises information on a first electronic device having obtained the first still image and information on a second electronic device having obtained the second still image, and
wherein the operation method further comprises:
determining whether the first electronic device and the second electronic device are identical to each other; and
according to determination that the first electronic device and the second electronic device are identical to each other, generating a third video in which at least some of the first image frames included in the first video and at least some of the second image frames included in the second video are reproduced continuously.

15. The operation method of claim 8, wherein metadata for the first still image further comprises information on at least some of the second image frames included in the second video.
